# EUROPÄISCHE PATENTSCHRIFT

(11) **EP 1 364 573 B1**
(45) Veröffentlichungstag und Bekanntmachung des Hinweises auf die Patenterteilung: **30.03.2005**
(21) Anmeldenummer: 03008811.6
(22) Anmeldetag: 23.04.2003
(51) Int. Cl.: A01D 78/10, A01B 69/00, A01B 51/04

(54) **Heuwerbungsmaschine**
Haymaker
Machine de fenaison

(30) Priorität: 21.05.2002 DE 20207865 U
(43) Veröffentlichungstag der Anmeldung: 26.11.2003
(73) Patentinhaber: Kverneland ASA, 4355 Kvernaland (NO)
(72) Erfinder: Gohl, Stefan, 78244 Cottmadingen (DE); A.T.M. van der Voort van der Kley, 2152 SE Nieuw Vennep (NL); Van Amstel, Leon, 6553 RW Geldrop (NL)
(74) Vertreter: Grünecker, Kinkeldey, Stockmair & Schwanhäusser Anwaltssozietät

(56) Entgegenhaltungen:
- EP-A- 0 937 382
- EP-B- 0 559 024
- DE-A- 4 419 054
- DE-U- 29 623 121
- FR-A- 2 376 606

## Beschreibung

Die Erfindung betrifft eine Heuwerbungsmaschine der im Oberbegriff des Anspruchs 1 angegebenen Art.

Die auf sehr große Arbeitsbreite einstellbare Heuwerbungsmaschine gemäß DE 199 52 555 A hat zwei Kreiselpaare mit gesteuerten Zinken, wobei zwischen jedem Kreisel des vorderen Werkzeug-Kreiselsatzes und einem Kreisel des hinteren Werkzeug-Kreiselsatzes quer zur Arbeitsfahrtrichtung eine Überlappung eingehalten wird. Das Fahrwerk der bekannten Heuwerbungsmaschine hat in Geradeausfahrtrichtung fixierte Laufräder. Die Heuwerbungsmaschine folgt deshalb dem ziehenden Schlepper wie ein Einachsanhänger, d.h., die Heuwerbungsmaschine schneidet die vom Schlepper gefahrene Kurve. Bei einem Lenkeinschlag des Schleppers nach rechts werden die Kreisel des vorderen Werkzeug-Kreiselsatzes um das Drehzentrum der Laufräder nach rechts verlagert, während die Kreisel des hinteren Werkzeug-Kreiselsatzes gleichzeitig um das Drehzentrum nach links verlagert werden. Um bei gegebener Kreiselgröße eine maximale Arbeitsbreite fahren zu können, sollte die Überlappung dann so klein wie möglich sein. Bei Geradeausfahrt reicht in der Arbeitsstellung der Kreisel eine kleine Überlappung aus, um die gesamte Arbeitsbreite zu bearbeiten. Bei Kurvenfahrt reicht eine leine Überlappung nicht mehr aus. Es verbleibt dann an der Kurveninnenseite ein unbearbeiteter Streifen. Um dies zu vermeiden, muss bei manchmal nicht vermeidbaren Kurven die Überlappung groß eingestellt werden, was jedoch die Arbeitsbreite vermindert. Ferner ist wegen des Kurvenschneidens der Heuwerbungsmaschine der Wendekreis am Vorgewende unzweckmäßig groß. Schließlich erhöht das nicht lenkbare Fahrwerk bei Kurvenfahrt des Schleppers z.B. auf dem Feld oder beim Transport die Gefahr von Kollisionen mit Hindernissen in der Kurveninnenseite, weil der Schwader die Kurve schneidet.

Bei der Kreiselheuwerbungsmaschine gemäß EP 0 937 382 A mit nur einem Werkzeug-Kreiselsatz mit zwei an gegenüberliegenden Seiten des Tragrahmens angeordneten Kreiseln sind die Laufräder des am hinteren Ende des Tragrahmens angeordneten Fahrwerks mit einer Zwangslenkvorrichtung lenkbar, die jegliche Ausrichtungsänderungen zwischen der Zugdeichsel und dem Schlepper in gegensinnige Lenkeinschläge der Laufräder umwandelt. Dank der Zwangslenkvorrichtung läuft die Heuwerbungsmaschine strikt in der Fahrspur des Schleppers und lässt sich ein kleiner Wendekreis auf dem Vorgewende fahren. Da nur zwei Kreisel vorgesehen sind, ist die Arbeitsbreite gering, und gibt bei Kurven keine Probleme mit unbearbeiteten Streifen auf dem Feld. Allerdings ist die Gefahr erhöht, dass wegen der in Kurven zwangsweise immer ausschwenkenden Heuwerbungsmaschine Kollisionen mit Hindernissen an der Kurvenaußenseite auftreten

DE 296 23 121 U veröffentlicht eine Heuwerbungsmaschine gemäβ dem Oberbegriff des 2 Patentanspruchs 1.

Der Erfindung liegt die Aufgabe zugrunde, eine Heuwerbungsmaschine der eingangs genannten Art anzugeben, deren Fahrverhalten trotz sehr großer Arbeitsbreite und mindestens vier Kreiseln beim Arbeiten im Feld und beim Ein- und Ausfahren in das Vorgewende optimiert ist. Wichtige Aspekte dieser Optimierung sind es, bei Kurven auf dem Feld unbearbeitete Streifen zu vermeiden und einen optimal kleinen Wendekreis auf dem Vorgewende zu ermöglichen, sowie eine präzise getimte Manipulation der Kreisel der vorderen und hinteren Werkzeug-Kreiselsätze bei der Einfahrt in das und bei der Ausfahrt aus dem Vorgewende zu gewährleisten.

Die gestellte Aufgabe wird mit den Merkmalen des Anspruchs 1 gelöst.

Mit den Merkmalen des Anspruchs 1 wird das Fahrverhalten der Heuwerbungsmaschine im Feld und mit maximaler Arbeitsbreite, d.h. bei minimaler Überlappung, optimiert, und ein kleiner Wendekreis im Vorgewende erzielt. Dank des automatischen Gleichrichtungs-Lenkmodus, der z.B. der abgesenkten Arbeitsstellung der Kreisel zugeordnet ist, bewegt sich die Heuwerbungsmaschine bei einem Einschlag des Schleppers zu einer Seite ebenfalls auf diese Seite, wodurch verhindert wird, dass selbst bei an sich minimaler Überlappung ein unbearbeiteter Streifen auf dem Feld stehen bleibt. Dank des automatischen Gegenrichtungs-Lenkmodus, der z.B. einer angehobenen Position der Kreisel zugeordnet ist, wie sie beim Einfahren in das oder beim Ausfahren aus dem Vorgewende ohnedies eingestellt ist, fährt die Heuwerbungsmaschine hingegen relativ genau in der Spur des Schleppers, so dass sich ein minimaler Wendekreis auf dem Vorgewende ergibt. Die beiden an sich gegensätzlichen Forderungen, d.h. gesteuertes Lenken der Heuwerbungsmaschine, z.B. beim Arbeiten, im gleichen Sinn wie des Schleppers, und gegensinniges Lenken der Heuwerbungsmaschine, z.B. auf dem Vorgewende, werden auf steuerungstechnisch einfachste Weise erfüllt.

Die Auswahl des jeweils benötigten Lenkmodus erfolgt zweckmäßig durch Zuordnung zu den Arbeits- bzw. Aushebepositionen der Kreise.

Bei einer einfachen Ausführungsform ist die Lenkvorrichtung im jeweiligen Lenkmodus proportional zumindest zum relativen Schwenkwinkel zwischen dem Tragrahmen und dem Schlepper betätigbar, und zwar so, dass mit zunehmendem relativem Schwenkwinkel der Lenkeinschlag der Laufräder vergrößert wird. Hierbei kann der Tragrahmen direkt an das Zugmaul des Schleppers gekuppelt sein. Wird zum Ankoppeln der Heuwerbungsmaschine ein Anbaubock verwendet, dann kann der relative Schwenkwinkel einfach zwischen dem Tragrahmen und dem Anbaubock abgegriffen werden.

Da bei einer Heuwerbungsmaschine mit z.B. vier Kreiseln für sehr große Arbeitsbreiten Fahrkonditionen unvermeidlich sind, in denen die automatischen Lenkmodii ungünstig sind, ist zusätzlich die Lenksteuerung umstellbar auf einen manuellen Lenkmodus der Lenkvorrichtung. Der Schlepperführer kann dann an der Lenksteuerung über den Betätiger die Lenkvorrichtung wie gewünscht betätigen, z.B. um schwierige Fahrmanöver von Hand auszuführen, und zwar sowohl beim Arbeiten im Feld, beim Fahren auf dem Vorgewende, als auch bei Transportfahrt oder dgl. Beispielsweise kann der Schlepperführer Hindernisse sauber ohne exzessive Lenkeinschläge des Schleppers umfahren. In diesem manuellen Lenkmodus führt das Fahrgestell keine von anderen Parametern ausgeführten Lenkbewegungen aus, die der Schlepperführer nicht bewusst einsteuern möchte.

Zweckmäßigerweise ist die Lenksteuerung mit einer Elektronik ausgestattet. Die Elektronik kooperiert mit Sensoren, die zumindest den relativen Schwenkwinkel, zweckmäßigerweise analog, und die Position der Kreisel, entweder analog oder nur stellungsbezogen, abgreifen und als Signale für zumindest die automatischen Lenkmodii liefern.

Besonders zweckmäßig ist zusätzlich z.B. ein an die Lenksteuerung angeschlossener Laufstrecken-Melder vorgesehen, z.B. ein Laufrad-Laufstrecken-Messsensor. Dieser ist nicht nur vorteilhaft, um die Arbeitsleistung aufzeichnen zu können, sondern er liefert der Lenksteuerung klare Informationen über bestimmte Abschnitte der Wegstrecke und/oder die Geschwindigkeit. Die Information zur Laufstrecke kann auch über einen Radar- oder Ultraschall-Sensor oder ein GPS-System beschafft werden.

Da die automatischen Lenkmodii nur ausgeführt mit dem relativen Schwenkwinkel zwischen dem Tragrahmen und dem Anbaubock gegebenenfalls nicht ausreichen, den Schlepperführer vollständig von der Arbeits-Überwachung oder von schwierigen Fahrmanövem zu entheben, ist es außerordentlich zweckmäßig, auch die Information über die Laufstrecke während einer Lenksteuerung zu berücksichtigen. Beispielsweise wird beim Arbeiten im Feld für zumindest den automatischen Gleichrichtungs-Lenkmodus die Zusatzinformation der Laufstrecke ab Beginn einer Kurvenfahrt benutzt, um die Laufräder rasch kräftiger einzuschlagen, als es der Zunahme des relativen Schwenkwinkels entspricht, um ein verzögertes Ansprechen der Lenkbewegung der Heuwerbungsmaschine auf die Lenkbewegung des Schleppers zu vermeiden und die Heuwerbungsmaschine exakt so zu steuern, dass selbst bei minimaler Überlappung kein unbearbeiteter Streifen auf dem Feld entsteht. Die Laufstreckeninformation kann auch dazu verwendet werden, den Lenkeinschlag der Laufräder mit zunehmendem relativem Schwenkwinkel wegstreckenabhängig zurückzunehmen, um ein zu weites seitliches Verlaufen der Heuwerbungsmaschine zu unterdrücken. Grundsätzlich liefert der Laufstreckenmelder einen hilfreichen Parameter für die gezielte Lenkung der Heuwerbungsmaschine mit Berücksichtigung des relativen Schwenkwinkels oder gegebenenfalls sogar nach einem abgelegten Kennfeld, z.B. um bei minimaler Überlappung und maximaler Arbeitsbreite unbearbeitete Streifen an beiden Seiten zu vermeiden.

Da zumindest der Abstand jedes Kreisels des vorderen Werkzeug-Kreiselsatzes vom Tragrahmen variierbar ist, kann es zweckmäßig sein, zumindest im Gleichrichtungs-Lenkmodus bei großer Arbeitsbreite und Kurvenfahrt z.B. flankierend den kurveninneren Kreisel näher zum Tragrahmen zu ziehen, um dort vorübergehend die Überlappung zu vergrößern und das Entstehen eines unbearbeiteten Streifens zu unterbinden. Dies kann über die Lenksteuerung manuell oder automatisch erfolgen, und geführt durch entsprechend angeordnete Sensoren.

Liegt die zur Lenkung der Heuwerbungsmaschine nutzbare Parameterinformation des Laufstreckenmelders an, so kann sie gewinnbringend auch noch zum Optimieren des Fahrverhaltens der Heuwerbungsmaschine beim Einfahren in das und beim Ausfahren aus dem Vorgewende eingesetzt werden. Hierzu ist es zweckmäßig, für die hydraulische Hebe- und Senksteuerung für die Kreisel, mit der wie üblich die Kreisel des vorderen Werkzeug-Kreiselsatzes getrennt von den Kreiseln des hinteren Werkzeug-Kreiselsatzes zu verschiedenen Zeitpunkten jeweils aufwärts- oder abwärtsverstellbar sind, ein wegabhängiges Maß für die Nacheilung einzustellen, und ab Anheben oder Absenken des jeweils früher zu verstellenden Kreisels dieses Maß mit der Laufstrecken-Information abzugleichen, um den richtigen Zeitpunkt für die Verstellung der jeweils später zu verstellenden Kreisel exakt zu treffen. Die zu berücksichtigende Laufstrecke wird z.B. auf den Abstand abgestimmt, der in Arbeitsfahrtrichtung zwischen den Werkzeug-Kreiselsätzen am Tragrahmen vorliegt. Dadurch erfolgt die Hebe- und Senksteuerung für die Kreisel vollständig geschwindigkeitsunabhängig, so dass saubere Übergänge in das und aus dem Vorgewende gefahren werden.

Um die Lenkvorrichtung sowohl in den automatischen Lenkmodii jeweils in Abhängigkeit von der Betriebskondition der Heuwerbungsmaschine unterschiedlich als auch im manuellen Lenkmodus individuell betätigen zu können, ist die Lenkvorrichtung zweckmäßig mit wenigstens einem Hydraulikzylinder ausgestattet, der über die Lenksteuerung aus einem Hydrauliksystem des Schleppers betätigbar ist. Es können auf diese Weise alle gewünschten Lenkbewegungen der Laufräder sauber ausgeführt und z.B. auch Einschlag-Grenzpositionen leicht eingestellt werden, und dgl.

Um den Schlepperfahrer, beispielsweise bei der Transportfahrt, zu entlasten, ist es ferner zweckmäßig, die Lenksteuerung mit einer Lenkblockierung auszustatten, mit der die Lenkvorrichtung in der Geradeausstellung der Laufräder blockierbar ist. Dann läuft die Heuwerbungsmaschine wie ein gezogener Anhänger nach.

Die Sensoren können Winkelsensoren, Drehencoder, Drucksensoren oder Radar- bzw. Ultraschallsensoren oder ein GPS-System umfassen. Beispielsweise wird der relative Drehwinkel durch einen Winkelsensor abgegriffen. Die Laufstrecke lässt sich auch einfach über einen Drehencoder an einem Laufrad darstellen. An den Hubarmen der Kreisel können Grenzschalter als Sensoren oder Winkelsensoren eingesetzt werden, oder nur Drucksensoren, die die Hydraulikdrücke im Hebe- oder Absenksystem überwachen.

Ein optimales Fahrverhalten der gelenkten Heuwerbungsmaschine ergibt sich mit Laufrädem, die in etwa in der Mitte zwischen den Werkzeug-Kreiselsätzen unter dem Tragrahmen und beiderseits des Tragrahmens positioniert sind.

Alternativ kann es aber auch zweckmäßig sein, die Laufräder des Fahrwerks hinter dem hinteren Werkzeug-Kreiselsatz anzuordnen.

Um die Handhabung für den Schlepperführer so bequem wie möglich zu machen, ist es zweckmäßig, die Lenksteuerung in einer am Schlepper anbringbaren Steuerkonsole unterzubringen, die nach moderner Technologie mit einem Display und einem integrierten Mikroprozessor ausgestattet ist. Die hydraulischen Komponenten, und auch Schaltblöcke, die Teile der Lenk- und Hebesteuerung sind, können hingegen bequem am Tragrahmen angebracht und mit der Steuerkonsole über Kabel verbunden sein.

Ausführungsformen des Erfindungsgegenstandes werden anhand der Zeichnungen erläutert. Es zeigen:
- Fig. 1: eine Schemadraufsicht einer von einem Schlepper gezogenen Heuwerbungsmaschine, und
- Fig. 2: eine Draufsicht einer Steuerkonsole.

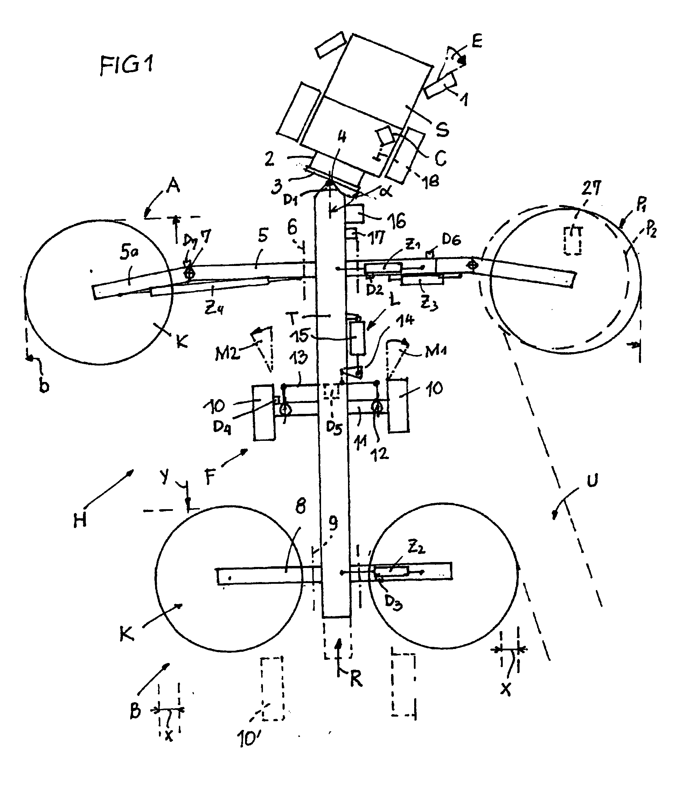

Eine Heuwerbungsmaschine H, hier ein Kreiselschwader mit vier Kreiseln K, ist an einen lenkbaren Schlepper S angekuppelt. Zumindest die Vorderräder 1 des Schleppers S sind lenkbar, beispielsweise um einen in Fig. 1 gezeigten Lenkeinschlag E nach rechts einzustellen. Der Schlepper S besitzt die übliche Dreipunkt-Anschlussvorrichtung, an deren Unterlenker 2 ein langgestreckter Tragrahmen T über einen Anbaubock 3 angeschlossen ist. Der Tragrahmen T ist um eine Hochachse 4 relativ zum Anbaubock 3 schwenkbar (relativer Schwenkwinkel α).

Am Tragrahmen T sind zwei Werkzeug-Kreiselsätze A, B in Arbeitsfahrtrichtung R hintereinander angeordnet, deren jeder aus zwei Kreiseln beiderseits des Tragrahmens T mit einer jeweils paarweisen Ausrichtung quer zur Arbeitsfahrtrichtung R besteht. Obwohl dies nicht gezeigt ist, könnten auch mehr als vier Kreisel vorgesehen sein.

Die Kreisel K des vorderen Werkzeug-Kreiselsatzes A sind über querliegende Hubarme 5 anhebbar und absenkbar (Gelenkachsen 6) mit dem Tragrahmen T verbunden. Die Hubarme 5 können längenverstellbar sein (Aktuatoren Z3), um den Abstand jedes Kreisel K vom Tragrahmen T zu ändern. Verstellbewegungen um die Gelenkachsen 6 werden beispielsweise mit Hydraulikzylindern Z1 ausgeführt. An den Enden der Hubarme 5 sind Hubhilfsarme 5a um in der gezeigten, abgesenkten Arbeitsposition P1 der Kreisel K annähernd bodensenkrechte Stellachsen 7 schwenkbar (Aktuatoren Z4), z.B. für die Transportfahrt oder um den Abstand des jeweiligen Kreisels K im Tragrahmen und seine Positionsrelation in Bezug auf den Kreisel K des hinteren Werkzeug-Kreiselsatzes B zu variieren.

Die beiden Kreisel K des hinteren Werkzeug-Kreiselsatzes B sind mit Hubarmen 8 um Gelenkachsen 9 anhebbar und absenkbar mit dem Tragrahmen T verbunden, wobei die Verstellbewegungen mit Hydraulikzylindern Z2 ausführbar sind.

In etwa in der Längsmitte zwischen den vorderen und hinteren Kreisel-Werkzeugsätzen A, B ist am Tragrahmen T ein Fahrwerk F angeordnet, das bei der gezeigten Ausführungsform zwei beiderseits des Tragrahmens T angeordnete Laufräder 10 an einem Achsträger 11 aufweist, wobei die Laufräder 10 um annähernd bodensenkrechte Lenkachsen 12 lenkbar sind. Für die Laufräder 10 ist eine Lenkvorrichtung L vorgesehen, von der eine Koppelstange 13, ein Umlenkmechanismus 14 und ein Hydraulikzylinder 15 gezeigt sind. Eine z.B. hydroelektrische Steuerschaltung 16 für den Hydraulikzylinder 15 ist am Vorderende des Tragrahmens T angebracht. Für die Hydraulikzylinder Z1 und Z2 zum Verstellen der Hubarme 5, 8 ist eine Anhebe- und Absenksteuerung 17 vorgesehen, beispielsweise am Vorderende des Tragrahmens T.

In der abgesenkten Arbeitsposition P1 bearbeiten die Kreisel K auf Stützrädern 27 abgestützt. Beispielsweise zum Wenden am Vorgewende lassen sich die Kreisel K in eine aus der Arbeitsposition P1 angehobenen Position P2 (gestrichelt angedeutet) anheben, in der ihre Hubarme 5, 8 weit V-förmig angestellt sind und der Bodenkontakt aufgehoben ist.

Z.B. im Bereich der Hochachse 4 ist zwischen dem Anbaubock 3 und dem Tragrahmen T ein Winkelsensor D1 vorgesehen. An den Hydraulikzylindem Z1, Z2 bzw. (nicht gezeigt) an den Hubarmen 5, 8 sind Sensoren D2, D3 angeordnet, beispielsweise Drucksensoren, Positionsschalter oder Grenzschalter oder dgl., sowie Sensoren D7, D6 zum Melden des Relativwinkels der Hubhilfsarme 5a in den Stellachsen 7 oder des Abstandes des Kreisels K vom Tragrahmen T. In der Lenkvorrichtung L ist ein Lenkwinkelsensor D5 vorgesehen. Schließlich ist an wenigstens einem Laufrad 10 ein Laufrad-Laufstrecken-Messsensor D4 vorgesehen. Anstelle des Messsensors D4 könnte ein Radar- oder Ultraschallsensor oder ein GPS-Systems vorgesehen sein.

In der Heuwerbungsmaschine können für die weiteren Funktionen, die hier von sekundärer Bedeutung sind, weitere Sensoren und Aktuatoren vorgesehen sein, die der Einfachheit halber hier nicht erläutert werden.

Für die Lenkvorrichtung L ist eine Lenksteuerung C, beispielsweise im Schlepper S vorgesehen, die mit den Aktuatoren und Sensoren über ein Kabel 18 (ein Steuerkabel) verbunden ist, beispielsweise mit der Hydrauliksteuerung 16 und der Hebe- und Senksteuerung 17 und dgl.

Gestrichelt ist als Alternative angedeutet, dass die Laufräder 10' am hinteren Ende des Tragrahmens T angeordnet sein könnten. Der in Arbeitsfahrtrichtung R gesehene Abstand zwischen dem vorderen und dem hinteren Werkzeug-Kreiselsatz A, B ist y, die größte Arbeitsbreite der Heuwerbungsmaschine H ist b. Die quer zur Arbeitsfahrtrichtung R gesehene Überlappung zwischen jedem Kreisel K des vorderen Werkzeug-Kreiselsatzes A und dem auf dieser Seite befindlichen Kreisel K des hinteren Werkzeug-Kreiselsatzes B ist für die größte Arbeitsbreite b mit x angedeutet.

Es ergibt sich aus Fig. 1, dass bei Geradeausfahrt der Heuwerbungsmaschine H und des Schleppers S die gesamte Arbeitsbreite b von außen nach innen bis auf den Streifen, in dem ein Schwad gebildet wird, bearbeitet wird, da die Überlappungen x dafür sorgen, dass keine unbearbeiteten Streifen entstehen. Wenn jedoch, wie in Fig. 1 gezeigt, der Schlepper den Lenkeinschlag E nach rechts ausführt, so dass sich der Anbaurahmen 3 um den relativen Schwenkwinkel α gegenüber dem Tragrahmen T verschwenkt, dann würde sich bei der weiteren Fahrt der Tragrahmen T um das virtuelle Drehzentrum des Fahrwerks F im Uhrzeigersinn verdrehen, und würde zumindest an der rechten Seite ein unbearbeiteter Streifen U entstehen, weil rechts keine Überlappung x mehr vorläge. Dies wird erfindungsgemäß auf folgende Weise vermieden.

Die Lenksteuerung C ist so konzipiert, dass sie wahlweise die Lenkvorrichtung L in einem Gleichrichtungs-Lenkmodus M1 oder einem Gegenrichtungs-Lenkmodus M2 betätigt, sobald eine Kurve beginnt. Die Auswahl zwischen den beiden Modii wird automatisch in Abhängigkeit davon getroffen, ob sich die Kreisel K in ihren Arbeitspositionen P1 oder in ihren angehobenen Positionen P2 befinden, und zwar derart, dass dem Gleichrichtungs-Lenkmodus M1 die Arbeitsposition P1 zugeordnet ist, hingegen dem Gegenrichtungs-Lenkmodus M2 die ausgehobene Position P2.

In der Annahme, dass in Fig. 1 auf dem Feld gearbeitet wird und die Kreisel K in ihren Arbeitspositionen P1 sind, wird automatisch der Gleichrichtungs-Lenkmodus M1 ausgeführt, sobald eine Kurve beginnt. Dies bedeutet, dass zumindest in Abhängigkeit von der Größe des relativen Schwenkwinkels α die Lenkvorrichtung L die Laufräder 10 (wie beim rechten Laufrad 10 angedeutet) in der gleichen Richtung, d.h. nach rechts, lenkt, wie auch die Vorderräder 1 des Schleppers S gelenkt sind. Der Lenkeinschlag der Laufräder 10 ist nicht notwendigerweise gleich groß wie der Lenkeinschlag E, sondern nur auf diesen so bezogen, dass die Heuwerbungsmaschine H dem Schlepper S so folgt, dass auf beiden Seiten des Tragrahmens T Überlappungen verbleiben und keine unbearbeiteten Streifen entstehen.

Um zu vermeiden, dass die Lenkvorrichtung zu langsam oder zu stark anspricht, kann bei dem automatischen Gleichrichtungs-Lenkmodus M1 auch die Information des Laufrad-Laufstrecken-Messsensors D4 ab Beginn einer Kurve berücksichtigt werden. Zweckmäßig ist in der Lenksteuerung C wenigstens ein Kennfeld abgelegt, das als Parameter relative Schwenkwinkel α und Laufstrecken, z.B. ab Beginn einer Kurvenfahrt, enthält. Das Kennfeld ist so konzipiert, dass zuverlässig dafür gesorgt ist, dass keine unbearbeiteten Streifen auf dem Feld entstehen. Gegebenenfalls wird sogar nur die Information der Laufstrecke ab Beginn einer Kurve beim automatischen Gleichrichtungs-Lenkmodus berücksichtigt. Als weitere Alternative kann zumindest im Gleichrichtungs-Lenkmodus M1 bei großer Arbeitsbreite auch zumindest der Kreisel K des vorderen Werkzeug-Kreiselsatzes A vorübergehend näher zum Tragrahmen T gezogen werden (Aktuator Z3 oder/und Z4), überwacht durch die an die Lenksteuerung C angeschlossenen Sensoren D7, D6, oder nach Sicht; d.h. automatisch oder durch Eingriff des Schlepperfahrers. Erfolgt dies automatisch, können im Kennfeld auch Kreiselabstände als Parameter berücksichtigt sein.

Ist hingegen die Heuwerbungsmaschine H im Begriff in das Vorgewende einzufahren, wobei der Schlepperführer zunächst die Kreisel K des vorderen Werkzeug-Kreiselsatzes A in ihre Positionen P2 anhebt (mittels der Zylinder Z1), dann ist ein Fahrverhalten der Heuwerbungsmaschine zweckmäßig, bei dem sich auf dem Vorgewende ein minimaler Wendekreis ergibt. Nacheilend zu den Kreiseln K des vorderen Werkzeug-Kreiselsatzes A werden beim Übergang in das Vorgewende auch die Kreisel K des hinteren Werkzeug-Kreiselsatzes B in ihre Positionen P2 ausgehoben. Der ausgehobene Zustand der Kreisel K des vorderen Werkzeug-Kreiselsatzes A und/oder beider Kreiselsätze A, B führt automatisch zur Auswahl des Gegenrichtungs-Lenkmodus M2 für die Lenkvorrichtung L, so dass diese, abhängig vom relativen Schwenkwinkel α und/oder der Laufstrecke der Laufräder 10 ab Beginn der Kurve und/oder ab dem Übergang in das Vorgewende die Laufräder 10 in der zum Lenkeinschlag E des Schleppers S entgegengesetzten Richtung (hier nach links) einschlägt (entgegengesetzt zur Einschlagrichtung der Vorderräder 1 des Schleppers S), so dass die Heuwerbungsmaschine zumindest in etwa der Spur des Schleppers S folgt und ein minimaler Wendekreis gefahren werden kann. Beim Ausfahren aus dem Vorgewende wird wieder der Gleichrichtungs-Lenkmodus M1 ausgewählt, sobald die Kreisel K in ihre Arbeitspositionen P1 abgesenkt sind. Die Positionen P1 bzw. P2 werden beispielsweise über die Sensoren D2, D3, und der Lenkeinschlag der Laufräder 10 mittels des Sensors D5 überwacht und gemeldet.

Die Hebe- und Senksteuerung 17 für die Zylinder Z1, Z2 ist so konzipiert, dass die Kreisel fahrgeschwindigkeitsunabhängig genau am Übergang in das oder am Übergang aus dem Vorgewende aufeinanderfolgend angehoben bzw. abgesenkt werden. Das Maß der Nacheilung der später zu verstellenden Kreisel des hinteren Werkzeug-Kreiselsatzes B wird in Form einer Laufstrecke in der Lenksteuerung C eingestellt, beispielsweise entsprechend dem Abstand y. Dabei wird z.B. das Signal des Messsensors D4 ab Verstellung der früher zu verstellenden Kreisel berücksichtigt, um die später zu verstellenden Kreisel dann zu verstellen, wenn die eingestellte Laufstrecke durchfahren ist.

Zumindest der wahlweise Gleichrichtungs-Lenkmodus M1 (mit oder ohne Berücksichtigung der Laufstrecke und/oder Verstellen des Kreiselabstandes) könnte alternativ auch nur für sehr große Arbeitsbreiten oder nur die maximale Arbeitsbreite b ausgeführt werden, weil bei geringeren Arbeitsbreiten die Überlappungen x groß genug sind, um das Entstehen unbearbeiteter Streifen auf dem Feld zu vermeiden.

Beim Ausführen des Gleichrichtungs-Lenkmodus M1 auf dem Feld fahren durch die überlagerte Berücksichtigung des relativen Schwenkwinkels α und der Laufstrecke sowie durch Verstellen des Kreiselabstands zumindest an der Kurveninnenseite oder nur mit Berücksichtigung der Laufstrecke bzw. nur durch Verstellen des Kreiselabstandes die hinteren Kreisel zumindest kurveninnenseitig exakt an oder geringfügig in der Arbeitskontur des vorderen Kreisels.

Beim Transport der Heuwerbungsmaschine H auf der Straße oder oberhalb einer bestimmten Fahrgeschwindigkeit, z.B. schneller als 12 km/h, ist es für den Schlepperführer bequemer, wenn die Heuwerbungsmaschine dem Schlepper wie ein normaler Einachsanhänger folgt. Für diesen Fall ist in der Lenksteuerung eine Lenkblockierung vorgesehen, mit der die Laufräder 10 in der Geradeausstellung (Fig. 1) blockiert werden. Alternativ können die Lenkcharakteristika, der Gegenrichtungs- und Gleichrichtungs-Lenkmodii stark reduziert oder minimiert ausgeführt werden, so dass die Heuwerbungsmaschine fast wie ein gezogener, ungelenkter Einachsanhänger folgt.

Weiterhin kann beim Einfahren in das Feld eine automatische Lenksteuerung der Heuwerbungsmaschine H Probleme dahingehend verursachen, dass das Ende der Heuwerbungsmaschine bei Kurvenfahrt zur einen oder anderen Seite ausschwenkt. Hingegen schneidet die Heuwerbungsmaschine bei eingestellter Lenkblockierung die Kurve. Sind nun im Ausschwenkbereich oder an der Kurveninnenseite Hindernisse vorhanden, dann würden der Schlepperfahrer zu gegebenenfalls schwierigen Manövern gezwungen oder würden Kollisionen eintreten. Aus diesem Grund ist die Lenksteuerung so konzipiert, dass sie auch einen manuellen Lenkmodus zulässt, in welchem der Schlepperführer die Heuwerbungsmaschine in Anpassung an die Gegebenheiten manuell lenken kann, d.h. entweder in einem manuellen Gegenrichtungs-Modus oder in einem manuellen Gleichrichtungs-Modus, dessen Ausmaß er nach Sicht einstellt. Gegebenenfalls nutzt der Schlepperfahrer auch dann die Möglichkeit der Verstellung des Kreiselabstandes.

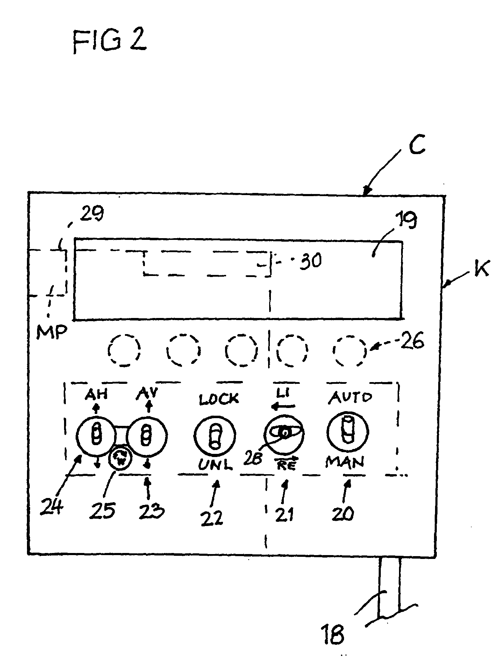

In Fig. 2 ist die Lenksteuerung C vereinfacht dargestellt, die im Schlepper S an einer ergonomisch günstigen Position platziert ist. Die Lenksteuerung C ist beispielsweise in einer Steuerkonsole K enthalten und besitzt eine Elektronik 29, mit einem Mikroprozessor MP, und eine Speichereinrichtung 30. in der Steuerkonsole K kann auch ein Display 19 enthalten sein, das gewählte Einstellungen anzeigt oder Einstellungen verfolgen lässt. In einer nur angedeuteten Reihe 26 von Einstellmöglichkeiten werden verschiedene Funktion der Heuwerbungsmaschine betätigt, die für die Erfindung von sekundärer Bedeutung sind.

Ein Schalter 20 ist vorgesehen, um die Lenksteuerung zwischen AUTO und MAN umzustellen. Dies besitzt z.B. einen Hebel, der in jeder der beiden Stellungen selbsttätig verbleibt. In der Einstellung AUTO ist die Lenksteuerung automatisch auf den wahlweisen Gleichrichtungs-Lenkmodus (ggfs. mit Berücksichtigung der Laufstrecke und/oder Verstellung des Kreiselabstands) und den automatischen Gegenrichtungs-Lenkmodus eingestellt. In der Stellung MAN ist die Lenksteuerung hingegen für den manuellen Lenkmodus eingestellt.

Ein Schalter 21 enthält einen Hebel 28, der aus der selbsthaltenden Mittelstellung (wie gezeigt) nach LI und nach RE verstellbar ist, und eine manuelle Lenkung der Laufräder 10 ermöglicht.

Ein Schalter 22 lässt sich zwischen zwei Stellungen LOCK und UNL umstellen. In der Stellung LOCK ist die Lenkvorrichtung L in der Geradeausstellung der Laufräder 10 hydraulisch blockiert. In der Stellung UNL ist hingegen die Lenkvorrichtung L entsperrt und entweder manuell oder automatisch betätigbar.

Zwei weitere Schalter 23, 24, z.B. Hebeln, die aus einer selbsthaltenden Mittelstellung nach oben oder nach unten bewegbar sind, sind den Hubarmen 5 und 8 bzw. den Zylindem Z1 und Z2 zugeordnet, um jeweils die Kreisel des vorderen und des hinteren Werkzeug-Kreiselsatzes A, B anzuheben oder abzusenken (Positionen P1, P2), wobei die Schalter 23, 24 mit AH und AV und Richtungspfeilen nach oben und nach unten markiert sind. Den beiden Schaltern 23, 24 ist ein Einsteller 25 (markiert mit einem Bogenpfeil und W), zugeordnet, mit dem z.B. die Laufstrecke einstellbar ist, die unter Berücksichtigung z.B. des Signals des Messsensors D4 ab Verstellen der früher zu verstellenden Kreisel gefahren wird, bis die später zu verstellenden Kreisel mit Nacheilung verstellt werden. Der Einsteller 25 lässt eine individuelle Einstellung der Laufstrecke zu. Alternativ kann auch eine feste Laufstrecke eingestellt sein, z.B. entsprechend dem Abstand y. Ggfs. ist ein weiterer, nicht gezeigter Schalter zum Verstellen des Kreiselabstands )im vorderen Werkzeug-Kreiselsatz A; einzeln und/oder gemeinsam) vorgesehen.

Die Hydrauliksteuerung 16 bzw. die Hebe- und Senksteuerung 17 werden aus einem nicht gezeigten Hydrauliksystem des Schleppers S versorgt. Hydraulikzylinder beispielsweise zum Verstellen der Hilfs-Hubarme 5a um ihre Stellachsen 7 sind der Einfachheit halber weggelassen.

Bei Transportfahrt werden die Hubarme 5 und 8 um die Gelenkachsen 6, 9 nach oben verschwenkt und zusätzlich die Hilfshubarme 5a entgegen der Arbeitsfahrtrichtung R nach hinten abgeklappt, um die Transportbreite- und -höhe einzuhalten.

## Patentansprüche

1. Heuwerbungsmaschine (H), insbesondere Schwader, mit
einem Tragrahmen (T), der um eine Hochachse (4) schwenkbar mit einem lenkbaren Schlepper (S) verbunden ist,
einem in Arbeitsfahrtrichtung (R) vorderen und einem hinteren Werkzeug-Kreiselsatz (A, B) aus je mindestens einem seitlich des Tragrahmens (T) an diesem anhebbar und absenkbar abgestützten Kreisel (K) mit Stützrädem (27), und
einem in Arbeitsfahrtrichtung (R) hinter zumindest dem vorderen Werkzeug-Kreiselsatz (A) am Tragrahmen (T) vorgesehenen Fahrwerk (F) mit Laufrädern (10),
die Laufräder (10) am Fahrwerk (F) gemeinsam lenkbar angebracht und mit einer am Tragrahmen (T) angeordneten Lenkvorrichtung (L) gekoppelt sind, **dadurch gekennzeichnet,**
**dass** für die Lenkvorrichtung (L) eine Lenksteuerung (C) vorgesehen ist, mit der die Lenkvorrichtung (L) wahlweise mindestens in einem automatischen Gegenrichtungs-Lenkmodus (M2) und einem automatischen Gleichrichtungs-Lenkmodus (M1) der Laufräder (10) betätigbar ist, mit einem Lenkeinschlag jeweils bezogen auf die Lenkeinschlagrichtung (E) des Schleppers (S).

2. Heuwerbungsmaschine nach Anspruch 1, **dadurch gekennzeichnet, dass** der Gleichrichtungs-Lenkmodus (M1) einer abgesenkten Arbeitsposition (P1) der Kreisel (K) und der Gegenrichtungs-Lenkmodus (M2) einer aus der Arbeitsposition angehobenen Position (P2) der Kreisel (K) zugeordnet sind.

3. Heuwerbungsmaschine nach Anspruch 1, **dadurch gekennzeichnet, dass** die Lenkvorrichtung (L) in dem Gegenrichtungs-Lenkmodus (M2) und in dem Gleichrichtungs-Lenkmodus (M1) automatisch jeweils zumindest proportional zum relativen Schwenkwinkel (α) zwischen dem Tragrahmen (T) und dem Schlepper (S), vorzugsweise zwischen dem Tragrahmen (T) und einem Anbaubock (3) zum Verbinden des Tragelements (T) mit dem Schlepper (S) betätigbar ist.

4. Heuwerbungsmaschine nach Anspruch 1, **dadurch gekennzeichnet, dass** die Lenksteuerung (C) umstellbar ist auf einen manuellen Lenkmodus der Lenkvorrichtung (L), und dass die Lenksteuerung (C) einen Betätiger (28), z.B. einen Joystick oder Kippschalter, zum Betätigen der Lenkvorrichtung (L) im manuellen Lenkmodus aufweist.

5. Heuwerbungsmaschine nach Anspruch 1, **dadurch gekennzeichnet, dass** die Heuwerbungsmaschine (H) Sensoren (D1 bis D7) zumindest für den relativen Schwenkwinkel (α) und die Position (P1, P2) der Kreisel (K) aufweist und dass die Lenksteuerung (C), vorzugsweise, eine Elektronik (29) enthält, die mit den Sensoren verbunden ist.

6. Heuwerbungsmaschine nach Anspruch 1, **dadurch gekennzeichnet, dass** zusätzlich ein an die Lenksteuerung (C) angeschlossener Laufstrecken-Geber, insbesondere ein Laufstrecken-Messsensor (D4) vorgesehen ist.

7. Heuwerbungsmaschine nach Anspruch 1, **dadurch gekennzeichnet, dass** der Laufstrecken-Geber ein dem Laufrad (10) zugeordneter Laufstrecken-Messsensor (D4) ist.

8. Heuwerbungsmaschine nach wenigstens einem der vorhergehenden Ansprüche, **dadurch gekennzeichnet, dass** Verstellaktuatoren (Z3, Z4) zum Verändern des Abstands zumindest des Kreisels (K) des vorderen Werkzeug-Kreiselsatzes (A) vom Tragrahmen (T) vorgesehen sind, und dass zumindest im Gleichrichtungs-Lenkmodus (M1) bei Kurvenfahrt automatisch oder manuell zusätzlich auch der Abstand des Kreisels (K) vom Tragbalken (T) variierbar ist.

9. Heuwerbungsmaschine nach Anspruch 6, **dadurch gekennzeichnet, dass** eine hydraulische Hebe- und Senksteuerung (17, 23, 24) für die Kreisel (K), insbesondere deren hydraulisch verstellbare Hubarme (5, 8), vorgesehen ist, mit der die Kreisel (K) des vorderen Werkzeug-Kreiselsatzes (A) getrennt von den Kreiseln (K) des hinteren Werkzeug-Kreiselsatzes (B) zu verschiedenen Zeitpunkten auf- bzw. abverstellbar sind, dass der Laufstrecken-Geber mit der Hebe- und Senksteuerung (17, 23, 24) verknüpfbar ist, und dass als Maß für die Nacheilung der Verstellung der jeweils später zu verstellenden Kreisel eine wählbare, vom Laufstrecken-Geber überwachte Laufstrecke ab Verstellung der jeweils früher zu verstellenden Kreisel eingestellt oder einstellbar ist, die von dem in Arbeitsfahrtrichtung (R) zwischen den Werkzeug-Kreiselsätzen (A, B) am Tragrahmen (T) vorliegenden Abstand (y) abhängt.

10. Heuwerbungsmaschine nach Anspruch 5 oder 8, **dadurch gekennzeichnet, dass** in einem der Elektronik (29) der Lenksteuerung (C) zugeordneten Speicher (30) wenigstens ein Kennfeld mit relativen Schwenkwinkeln (α) und Laufstrecken, vorzugsweise auch mit Abständen des Kreisels (K) vom Tragrahmen (T), ab Beginn eines Lenkeinschlags als Kennfeld-Parameter gespeichert ist, und dass im automatischen Gleichrichtungs-Lenkmodus (M1) bzw. im automatischen Gegenrichtungs-Lenkmodus (M2) die Lenkvorrichtung (L) nach Vorgabe durch das Kennfeld betätigbar ist.

11. Heuwerbungsmaschine nach Anspruch 1, **dadurch gekennzeichnet, dass** die Lenkvorrichtung (L) mit wenigstens einem Hydraulikzylinder (15) ausgestattet ist, der über die Lenksteuerung (C) und aus einem Hydrauliksystem des Schleppers (S) betätigbar ist.

12. Heuwerbungsmaschine nach Anspruch 1, **dadurch gekennzeichnet, dass** die Lenksteuerung (C) eine Lenkblockierung (22) aufweist, mit der die Lenkvorrichtung (L) in der Geradeausstellung der Laufräder (10) blockierbar ist.

13. Heuwerbungsmaschine nach Anspruch 5 **dadurch gekennzeichnet, dass** die Sensoren (D1 bis D5) Winkelsensoren, Drehencoder und Drucksensoren umfassen.

14. Heuwerbungsmaschine nach Anspruch 1, **dadurch gekennzeichnet, dass** die Laufräder (10) des Fahrwerks (F) quer zur Arbeitsfahrtrichtung (R) an beiden Seiten des Tragrahmens (T) und in etwa in der Mitte zwischen den Werkzeug-Kreiselsätzen (A, B) angeordnet sind.

15. Heuwerbungsmaschine nach Anspruch 1, **dadurch gekennzeichnet, dass** die Laufräder (10') des Fahrwerks quer zur Arbeitsfahrtrichtung an beiden Seiten des Tragrahmens (T) und in Arbeitsfahrtrichtung (R) hinter dem hinteren Werkzeug-Kreiselsatz (B) angeordnet sind.

16. Heuwerbungsmaschine nach Anspruch 1, **dadurch gekennzeichnet, dass** die Lenksteuerung (C) in einer am Schlepper (S) anbringbaren Steuerkonsole (K), vorzugsweise mit einem Display (19) und einem integrierten Mikroprozessor (MP), enthalten ist.

## Claims

1. Haymaking machine (H), more especially tedder, having
a supporting frame (T), which is connected to a steerable tractor (S) so as to be pivotable about a vertical axis (4),
when viewed with respect to the direction of travel (R), a front set of rotary head tools and a rear set of rotary head tools (A, B), each produced from at least one rotary head (K) with support wheels (27), said rotary head (K) being supported laterally of the supporting frame (T) so as to be raisable and lowerable on said supporting frame (T), and
a framework (F) with running wheels (10), said framework (F), when viewed with respect to the direction of travel (R), being provided behind at least the front set of rotary tools (A) on the supporting frame (T),
the running wheels (10), which are mounted on the framework (F) so as to be steerable in common and are coupled to a steering apparatus (L), which is disposed on the supporting frame (T),
**characterised in that**
a steering controlling means (C) is provided for the steering apparatus (L), with which steering controlling means (C) the steering apparatus (L) is actuatable in a selective manner at least in an automatic opposite direction steering mode (M2) and an automatic same direction steering mode (M1) of the running wheels, with a maximum angle of turn in each case relative to the direction (E) of the maximum angle of turn of the tractor (S).

2. Haymaking machine according to claim 1, **characterised in that** the same direction steering mode (M1) is associated with a lowered operating position (P1 ) of the rotary head (K) and the opposite direction steering mode (M2) is associated with a position (P2) of the rotary head (K) raised out of the operating position.

3. Haymaking machine according to claim 1, **characterised in that** the steering apparatus (L) is actuatable in the opposite direction steering mode (M2) and in the same direction steering mode (M1) automatically in each case at least in proportion to the relative pivotal angle (α) between the supporting frame (T) and the tractor (S), preferably between the supporting frame (T) and a mounting support (3) for connecting the supporting member (T) to the tractor (S).

4. Haymaking machine according to claim 1, **characterised in that** the steering controlling means (C) can be switched to a manual steering mode of the steering apparatus (L), and **in that** the steering controlling means (C) includes an actuator (28), for example a joystick or toggle switch, for actuating the steering apparatus (L) in the manual steering mode.

5. Haymaking machine according to claim 1, **characterised in that** the haymaking machine (H) includes sensors (D1 to D7) at least for the relative pivotal angle (α) and the position (P1, P2) of the rotary heads (K), and **in that** the steering controlling means (C), preferably, contains an electronics system (29), which communicates with the sensors.

6. Haymaking machine according to claim 1, **characterised in that**, in addition, a section indicating means, more especially a section measuring sensor (D4), is provided connected to the steering controlling means (C).

7. Haymaking machine according to claim 1, **characterised in that** the section indicating means is a section measuring sensor (D4) associated with the running wheel (10).

8. Haymaking machine according to at least one of the preceding claims, **characterised in that** adjusting actuators (Z3, Z4) are provided for altering the distance at least between the rotary head (K) of the front set of rotary head tools (A) and the supporting frame (T), and **in that**, in addition, at least in the same direction steering mode (M1) when travelling round corners, the distance between the rotary head (K) and the supporting frame (T) is also variable automatically or manually.

9. Haymaking machine according to claim 6, **characterised in that** a hydraulic lifting and lowering controlling means (17, 23, 24) is provided for the rotary heads (K), more especially for the hydraulically adjustable lifting arms (5, 8) of said rotary heads (K), with which hydraulic lifting and lowering controlling means (17, 23, 24) the rotary heads (K) of the front set of rotary head tools (A) are adjustable up and down at different times separately from the rotary heads (K) of the rear set of rotary head tools (B), **in that** the section indicating means is linkable to the lifting and lowering controlling means (17, 23, 24), and **in that**, as a measurement for the lagging behind of the adjusting of the rotary head to be adjusted later in each case, a selectable section, which is monitored by the section indicating means, is set or is settable from the moment of the adjusting of the rotary head to be adjusted earlier in each case, said section depending on the distance (y) in the operating direction (R) between the sets of rotary head tools (A, B) on the supporting frame (T).

10. Haymaking machine according to claim 5 or 8, **characterised in that** at least one characteristic field with relative pivotal angles (α) and sections, preferably also with the distances between the rotary head (K) and the supporting frame (T), is stored in a memory (30), associated with the electronics system (29) of the steering controlling means (C), from the beginning of a maximum angle of turn as a characteristic field parameter, and **in that**, in the automatic same direction steering mode (M1) or respectively in the automatic opposite direction steering mode (M2), the steering apparatus (L) is actuatable according to preset data provided by the characteristic field.

11. Haymaking machine according to claim 1, **characterised in that** the steering apparatus (L) is provided with at least one hydraulic cylinder (15), which is actuatable via the steering controlling means (C) and is part of a hydraulic system of the tractor (S).

12. Haymaking machine according to claim 1, **characterised in that** the steering controlling means (C) includes a steering blocking means (22), with which the steering apparatus (L) is blockable in the straight-on position of the running wheels (10).

13. Haymaking machine according to claim 5, **characterised in that** the sensors (D1 to D5) include angle sensors, rotation coders and pressure sensors.

14. Haymaking machine according to claim 1, **characterised in that** the running wheels (10) of the framework (F) are disposed transversely relative to the operating direction (R) on both sides of the supporting frame (T) and approximately in the centre between the sets of rotary head tools (A, B).

15. Haymaking machine according to claim 1, **characterised in that** the running wheels (10) of the framework are disposed transversely relative to the operating direction on both sides of the supporting frame (T) and in the operating direction (R) behind the rear set of rotary head tools (B).

16. Haymaking machine according to claim 1, **characterised in that** the steering controlling means (C) is accommodated in a control console (K), which is mountable on the tractor (S) and preferably has a display (19) and an integrated microprocessor (MP).

## Revendications

1. Machine pour la fenaison (H), en particulier andaineuse, avec
un cadre de support (T) qui est relié autour d'un axe haut (4) d'une manière pivotante à un tracteur (S) pouvant être dirigé,
un ensemble d'éléments gyroscopiques d'outil (A, B) avant et arrière dans la direction de roulement (R) pour le travail constitué chacun d'au moins un élément gyroscopique (K) supporté à côté du cadre de support (T) à celui-ci en pouvant être relevé et abaissé, avec des roues de support (27) et
un mécanisme de roulement (F) avec des roues de roulement (10) prévu dans la direction de roulement (R) pour le travail derrière au moins l'ensemble d'éléments gyroscopiques d'outil avant (A) au cadre de support (T), où les roues de roulement (10) sont disposées au mécanisme de roulement (F) de manière à pouvoir être dirigées en commun et sont couplées à un dispositif de guidage (L) disposé au cadre de support (T),
**caractérisée en ce qu'**il est prévu pour le dispositif de guidage (L) une commande de guidage (C), au moyen de laquelle le dispositif de guidage (L) est actionnable sélectivement au moins selon un mode de guidage automatique en direction opposée (M2) et un mode de guidage automatique dans la même direction (M1) des roues de roulement (10), avec un braquage de guidage à chaque fois relativement à la direction de braquage de guidage (E) du tracteur (S).

2. Machine pour la fenaison selon la revendication 1, **caractérisée en ce que** le mode de guidage de même direction (M1) est associé à une position de travail abaissée (P1) des éléments gyroscopiques (K), et le mode de guidage de direction opposée (M2) à une position (P2) des éléments gyroscopiques (K) relevée de la position de travail.

3. Machine pour la fenaison selon la revendication 1, **caractérisée en ce que** le dispositif de guidage (L) est actionnable en mode de guidage de direction opposée (M2) et en mode de guidage de même direction (M1) automatiquement respectivement au moins proportionnellement à l'angle de pivotement relatif (α) entre le cadre de support (T) et le tracteur (S), de préférence entre le cadre de support (T) et une patte d'attache portée (3) pour relier l'élément de support (T) au tracteur (S).

4. Machine pour la fenaison selon la revendication 1, **caractérisée en ce que** la commande de guidage (C) peut être changée à un mode de guidage manuel du dispositif de guidage (L), et **en ce que** la commande de guidage (C) présente un organe d'actionnement (28), par exemple une manette ou commutateur basculant, pour actionner le dispositif de guidage (L) en mode de guidage manuel.

5. Machine pour la fenaison selon la revendication 1, **caractérisée en ce que** la machine pour la fenaison (H) présente des capteurs (D1 à D7) au moins pour l'angle de pivotement relatif (α) et la position (P1, P2) des éléments gyroscopiques (K), et **en ce que** la commande de guidage (C) comporte de préférence une électronique (29) qui est reliée aux capteurs.

6. Machine pour la fenaison selon la revendication 1, **caractérisée en ce qu'**il est prévu additionnellement un capteur de déplacement connecté à la commande de guidage (C), en particulier un capteur de mesure de déplacement (D4).

7. Machine pour la fenaison selon la revendication 1, **caractérisée en ce que** le capteur de déplacement est un capteur de mesure de déplacement (D4) associé à la roue de roulement (10).

8. Machine pour la fenaison selon au moins l'une des revendications précédentes, **caractérisée en ce que** sont prévus des actionneurs de déplacement (Z3, Z4) pour modifier l'écart au moins de l'élément gyroscopique (K) du jeu d'éléments gyroscopiques d'outil avant (A) du cadre de support (T), et **en ce que**, au moins en mode de guidage de même direction (M1), lors de la négociation d'un virage, également l'écart de l'élément gyroscopique (K) de la poutre de support (T) est variable automatiquement ou manuellement.

9. Machine pour la fenaison selon la revendication 6, **caractérisée en ce qu'**il est prévu une commande de levage et d'abaissement hydraulique (17, 23, 24) pour les éléments gyroscopiques (K), en particulier pour les bras de levage (5, 8) ajustables d'une manière hydraulique de ceux-ci, au moyen de laquelle les éléments gyroscopiques (K) du jeu d'éléments gyroscopiques d'outil avant (A) peuvent être relevés respectivement abaissés séparément des éléments gyroscopiques (K) du jeu d'éléments gyroscopiques d'outil arrière (B) à des instants différents, **en ce que** le capteur de déplacement peut être connecté à la commande de levage et d'abaissement (17, 23, 24), et **en ce que** comme mesure pour le retard du déplacement des éléments gyroscopiques à déplacer respectivement ultérieurement, un déplacement sélectif, surveillé par le capteur de déplacement, est réglé ou peut être réglé à partir du déplacement des éléments gyroscopiques à déplacer respectivement plus tôt, qui dépend de l'écart (y) existant dans la direction de roulement (R) pour le travail entre les jeux d'éléments gyroscopiques d'outil (A, B) au cadre de support (T).

10. Machine pour la fenaison selon la revendication 5 ou 8, **caractérisée en ce qu'**il est stocké dans une mémoire (30) associée à l'électronique (29) de la commande de guidage (C) au moins un champ caractéristique avec des angles de pivotement relatifs (α) et des déplacements, de préférence également avec des écarts de l'élément gyroscopique (K) du cadre de support (T), à partir du début d'un braquage de guidage comme paramètre de champ caractéristique, et **en ce qu'**en mode de guidage automatique de même direction (M1), respectivement en mode de guidage automatique en direction opposée (M2), le dispositif de guidage (L) est actionnable selon la consigne donnée par le champ caractéristique.

11. Machine pour la fenaison selon la revendication 1, **caractérisée en ce que** le dispositif de guidage (L) est équipé d'au moins un vérin hydraulique (15) qui est actionnable par la commande de guidage (C) et à partir d'un système hydraulique du tracteur (S).

12. Machine pour la fenaison selon la revendication 1, **caractérisée en ce que** la commande de guidage (C) présente un blocage de guidage (22) au moyen duquel le dispositif de guidage (L) peut être bloqué dans la position rectiligne des roues de roulement (10).

13. Machine pour la fenaison selon la revendication 5, **caractérisée en ce que** les capteurs (D1 à D5) comprennent des capteurs d'angle, des codeurs de rotation et des capteurs de pression.

14. Machine pour la fenaison selon la revendication 1, **caractérisée en ce que** les roues de roulement (10) du mécanisme de roulement (F) sont disposées transversalement à la direction de roulement (R) pour le travail aux deux côtés du cadre de support (T) et à peu près au milieu entre les jeux d'éléments gyroscopiques d'outil (A, B).

15. Machine pour la fenaison selon la revendication 1, **caractérisée en ce que** les roues de roulement (10') du mécanisme de roulement sont disposées transversalement à la direction de roulement pour le travail aux deux côtés du cadre de support (T) et dans la direction de roulement (R) pour le travail derrière le jeu d'éléments gyroscopiques d'outil arrière (B).

16. Machine pour la fenaison selon la revendication 1, **caractérisée en ce que** la commande de guidage (C) se trouve dans une console de commande (K) pouvant être montée sur le tracteur (S), de préférence avec un écran d'affichage (19) et un microprocesseur intégré (MP).
